# EUROPEAN PATENT SPECIFICATION

(11) **EP 0 730 623 B1**
(45) Date of publication and mention of the grant of the patent: **04.03.1998**
(21) Application number: 95902594.1
(22) Date of filing: 18.11.1994
(51) Int. Cl.: C08L 23/16, C08K 3/36, C08F 210/06

(54) **RANDOM COPOLYMER COMPOSITIONS**
RANDOMCOPOLYMERISATZUSAMMENSETZUNG
COMPOSITIONS DE COPOLYMERES ALEATOIRES

(30) Priority: 23.11.1993 US 157787; 23.11.1993 US 161552
(43) Date of publication of application: 11.09.1996
(73) Proprietor: UNION CARBIDE CHEMICALS & PLASTICS TECHNOLOGY CORPORATION, Danbury, Connecticut 06817-0001 (US)
(72) Inventor: CHATTERJEE, Ananda, Mohan, Katy, TX 77450 (US); CAMPBELL, Randolph, Neil, Katy, TX 77493 (US)
(74) Representative: Allard, Susan Joyce
(86) International application number: US9413309
(87) International publication number: WO9514738

(56) References cited:
- EP-A- 0 099 251
- EP-A- 0 450 456
- EP-A- 0 577 407
- GB-A- 2 105 651
- DATABASE WPI Section Ch, Week 9247, Derwent Publications Ltd., London, GB; Class A60, AN 92-387816 & JP,A,4 288 353 (MIZUSAWA CHEM IND) 13 October 1992
- DATABASE WPI Section Ch, Week 9112, Derwent Publications Ltd., London, GB; Class A17, AN 91-084547 & JP,A,3 031 344 (CHISSO) 12 February 1991

## Description

### Technical Field

This invention relates to compositions comprising random copolymers of propylene and butene-1 having improved optical properties suitable for the preparation of film having a low hexane extractables content. This invention also relates to random copolymers of propylene and butene-1 suitable for the preparation of oriented film having good tensile properties and excellent optical properties, such as low haze and low yellowing.

### Background Art

Polyolefin polymers compositions have gained wide acceptance and usage in numerous commercial applications because of the relatively low cost of the polymers and the desirable properties they exhibit. Such commercial applications include plastic film, such as cast and oriented films. The plastic film can be used for food and commercial product packaging, containers for food, and medical devices such as syringes. It is very important for materials used as packaging for foods, medical devices, and other commercial products, that the presence or absence of impurities or foreign substances such as refuse in the contents of a container can be externally confirmed. It is not desirable that the color tint of the contents be changed when it is observed through the container. For this reason, it is desired to use a polymer composition of high transparency, high gloss and good color, in these fields. Moreover, in recent years, the film industry is requesting polymer compositions with improved tensile properties in order to facilitate processability.

In an attempt to provide homopolymer products capable of withstanding commercial stretching ratios, it is known to adjust the amorphous or solubles content of the homopolymer from 4.2% weight (% wt) to 6.0% wt. The tensile strength of these increased amorphous containing polymers is still low relative to ethylene random copolymers. Ethylene randoms containing 0.3% to 0.7% by weight of ethylene are typically used to obtain a good balance between processability and mechanical properties for oriented propylene film. Incorporation of ethylene in amounts greater than 0.5% weight tends to result in a softer product having a low tensile modulus. Further, ethylene random films tend to show visible signs of aging such as a "grease" or "bloom" layer developing on the surface of the film which adversely effects the clarity of the film.

Antiblock agents have been typically used in polymer films to prevent the blocking (or sticking together) of the polymer film. However, these antiblock agents have an adverse effect on the optical properties such as haze and gloss of the polymer film.

Low hexane extractables content copolymer is very desirable because the U.S. Food and Drug Administration ("FDA") has specific solubles requirements that polyolefin copolymers must satisfy in order to be used for food or medical applications. As noted previously, ethylene random copolymers are typically used for food and medical packaging. However, ethylene randoms may require an additional washing step during manufacture to meet the FDA hexane extractables limits.

It would be of advantage to provide improved random copolymers, and films thereof including a process for producing the improved copolymers, having an improved balance of good optical properties such as low haze, low blooming, good color, low yellowing, and low hexane extractables, low xylene solubles levels, improved tensile strength and high stiffness.

EP-A-450,456 discloses copolymers of propylene and al-alkene obtainable by a gas-phase polymerisation in the absence of a liquid with no condensation of the monomers in the gas space using a Ziegler-Natta catalyst. The partial pressure of the propylene to 1-alkene is from 5:1 to 100:1.

GB-A-2,105,651 discloses a polypropylene film which comprises a crystalline propylene/a-olefin or crystalline propylene/a-olefin/ethylene copolymer layer containing 10-30 wt% of C₄₋₁₈ α-olefin, 0-5 wt% of ethylene and 10 wt% or less of a 20°C xylene-soluble polymer. Copolymers comprising 0.5% or more of a silicon type antiblocking agent are described.

Metallized polypropylene based films are disclosed in JP-A-3,031,344 and EP-A-99,251.

### Disclosure of the Invention

The present invention relates to a polymer composition having improved balanced mechanical and optical properties. More particularly, the present invention provides a polymer composition comprising (i) a random copolymer comprising from 0.5% to 20% by weight of butene-1 and from 80% to 99.5% by weight of propylene, and (2) from 0%-0.35% by weight of the polymer composition of a synthetic amorphous silica antiblock agent having a bulk density in the range from 300 to 360 gm/liter and an oil absorption in the range from 80 to 100 gm/100 gm; wherein the polymer composition has:
(a) a hexane extractable at 50°C of up to 5.5%, according to 21 C.F.R. 177.1520(C) (3.2),
(b) a haze, as measured by ASTM D-1003, of up to 5%,
(c) a xylene soluble level at 23°C of up to 13%, measured according to 21 C.F.R. 177.1520,
(d) a tensile modulus of at least 2812 (7031) kg/cm² (40,000 (100,000) psi) according to ASTM D882 (1% secant at 0.13 cm/min (0.05 inches/min)), and
(e) an elongation at break, as measured according to ASTM D882, in the range of 80% to 2000%.

In one embodiment the copolymer comprises from 0.8% to 20% by weight of butene-1 and from 80% to 99.5% by weight of propylene.

The invention also provides a process for producing the random copolymer composition in the presence of a high activity stereoregular catalyst system obtained by contacting (i) an olefin polymerization procatalyst with (ii) an organoaluminum cocatalyst and (iii) a selectivity control agent.

Further, the invention relates to film product that comprises an oriented substrate layer of the random copolymer composition and a polymeric layer on at least one surface of the random copolymer substrate layer. The invention also provides a metallized random copolymer film.

### Best Mode for carrying Out the Invention

The polymer resin compositions of the present invention can be obtained by polymerizing propylene and butene-1 under polymerization conditions in the presence of a titanium-based, olefin polymerization catalyst system, such as a magnesium, titanium-containing polymerization catalyst system. Such polymerization catalyst systems are typically obtained by the combination of a titanium halide-based catalyst component, an organoaluminum compound and one or more electron donors. For convenience of reference, the solid titanium-containing catalyst component is referred to herein as "procatalyst", the organoaluminum compound, as "cocatalyst", and the electron donor compound, which is typically used separately as "selectivity control agent" (SCA).

Although a variety of chemical compounds are useful for the production of the procatalyst, a typical procatalyst of the invention is prepared by halogenating a magnesium compound of the formula MgR'R", wherein R' is an alkoxide or aryloxide group and R" is an alkoxide, hydrocarbyl carbonate, aryloxide group or halogen, with a halogenated tetravalent titanium compound in the presence of a halohydrocarbon and an electron donor.

The magnesium compound employed in the preparation of the solid catalyst component contains alkoxide, aryloxide, hydrocarbyl carbonate or halogen. The alkoxide, when present generally contains from 1 to 10 carbon atoms. Alkoxide containing from 1 to 8 carbon atoms is preferable, with alkoxides of 2 to 4 carbon atoms being more preferable. The aryloxide, when present generally contains from 6 to 10 carbon atoms, with 6 to 8 carbon atoms being preferred. The hydrocarbyl carbonate, when present generally contains 1 to 10 carbon atoms. When halogen is present, it is preferably present as bromine, fluorine, iodine or chlorine, with chlorine being more preferred.

Suitable magnesium compounds are magnesium chloride, ethoxy magnesium bromide, isobutoxy magnesium chloride, phenoxy magnesium iodide, magnesium fluoride, cumyloxy magnesium bromide, magnesium diethoxide, magnesium isopropoxide, magnesium stearate, magnesium ethyl carbonate and naphthoxy magnesium chloride. The preferred magnesium compound is magnesium diethoxide.

Halogenation of the magnesium compound with the halogenated tetravalent titanium compound is typically effected by using an excess of the titanium compound. At least 2 moles of the titanium compound should ordinarily be used per mole of the magnesium compound. Preferably from 4 moles to 100 moles of the titanium compound are used per mole of the magnesium compound, and most preferably from 8 moles to 20 moles of the titanium compound are used per mole of the magnesium compound.

Halogenation of the magnesium compound with the halogenated tetravalent titanium compound can be effected by contacting the compounds at an elevated temperature in the range from 60°C to 150°C, preferably from 70°C to 120°C. Usually the reaction is allowed to proceed over a period of 0.1 to 6 hours, preferably from 0.5 to 3.5 hours. The halogenated product is a solid material which can be isolated from the liquid reaction medium by filtration, decantation or other suitable method.

The halogenated tetravalent titanium compound employed to halogenate the magnesium compound usually contains at least two halogen atoms, and preferably contains four halogen atoms. The halogen atoms are chlorine atoms, bromine atoms, iodine atoms or fluorine atoms. The halogenated tetravalent titanium compound thus has up to two alkoxy or aryloxy groups. Examples of suitably halogenated tetravalent titanium compounds include alkoxy titanium halides, diethoxytitanium dibromide, isopropoxy-titanium triiodide, dihexoxytitanium dichloride, and phenoxy-titanium trichloride, titanium tetrahalides such as titanium tetrachloride and titanium tetrabromide. The preferred halogenated tetravalent titanium compound is titanium tetrachloride.

Suitable halohydrocarbons, which may be present, include aromatic or aliphatic, including cyclic and alicyclic compounds. Preferably the halohydrocarbon contains 1 or 2 halogen atoms, although more may be present if desired. It is preferred that the halogen is, independently, chlorine, bromine or fluorine. Exemplary of suitable aromatic halohydrocarbons are chlorobenzene, promobenzene, dichlorobenzene, dichlorodibromobenzene, o-chlorotoluene, chlorotoluene, dichlorotoluene, chloronaphthalene. chlorobenzene o-chlorotoluene and dichlorobenzene are the preferred halohydrocarbons, with chlorobenzene and o-chlorotoluene being more preferred.

The aliphatic halohydrocarbons which can be employed suitably have 1 to 12 carbon atoms. Preferably such halohydrocarbons have 1 to 9 carbon atoms and at least 2 halogen atoms. Most preferably the halogen is present as chlorine. Suitable aliphatic halohydrocarbons include dibromomethane, trichloromethane, 1,2-dichloroethane, trichloroethane, dichlorofluoroethane, hexachloroethane, trichloropropane, chlorobutane, dichlorobutane, chloropentane, trichloro-fluorooctane, tetrachloroisooctane, dibromodifluorodecane. The preferred aliphatic halohydrocarbons are carbon tetrachloride and trichloroethane.

Aromatic halohydrocarbons are preferred, particularly those of 6 to 12 carbon atoms, and especially those of 6 to 10 carbon atoms.

Suitable inert hydrocarbon diluents include aromatic hydrocarbons such as toluene, o-xylene, m-xylene, p-xylene, benzene, ethylbenzene, propylbenzene such as isopropylbenzene or cumene or trimethylbenzene which are liquid at normal temperature.

The electron donors which are suitably included within the procatalyst can be the conventional electron donors employed in titanium-based olefin polymerization procatalysts including ethers, esters, ketones, amines, imines, nitriles, phosphines, stibines, arsines and alcoholates. The preferred electron donors are esters and particularly aliphatic esters of aromatic monocarboxylic or dicarboxylic acids. Examples of such preferred electron donors are methyl benzoate, ethyl benzoate, ethyl p-ethoxybenzoate, ethyl p-methylbenzoate, diethyl phthalate, dibutylphthalate, diisobutyl phthalate, diisopropyl terephthalate and dimethyl naphthalene-dicarboxylate. The electron donor is a single compound or a mixture of two or more compounds but preferably the electron donor is provided as a single compound. Of the preferred ester electron donors, ethyl benzoate and diisobutyl phthalate are particularly preferred. Sufficient electron donor should be provided so that the molar ratio of electron donor to magnesium in the procatalyst is from 0.002 to 0.3. It is preferred that the molar ratio of electron donor to magnesium in the procatalyst is from 0.03 to 0.2, with a ratio from 0.03 to 0.16 being more preferred.

After the solid halogenated product has been separated from the liquid reaction medium, it can be treated one or more times with additional halogenated tetravalent titanium compound. Preferably, the halogenated product is treated multiple times with separate portions of the halogenated tetravalent titanium compound. Better results are obtained if the halogenated product is treated twice with separate portions of the halogenated tetravalent titanium compound. As in the initial halogenation, at least 2 moles of the titanium compound should ordinarily be employed per mole of the magnesium compound, and preferably from 4 moles to 100 moles of the titanium compound are employed per mole of the magnesium compound, most preferably from 4 moles to 20 moles of the titanium compound per mole of the magnesium compound.

The reaction conditions employed to treat the solid halogenated product with the titanium compound are the same as those employed during the initial halogenation of the magnesium compound.

Optionally, the solid halogenated product is treated at least once with one or more acid chlorides after washing the solid halogenated product at least once with additional amounts of the halogenated tetravalent titanium compound. Suitable acid chlorides include benzoyl chloride and phthaloyl chloride. The preferred acid chloride is phthaloyl chloride.

After the solid halogenated product has been treated one or more times with additional halogenated tetravalent titanium compound, it can be separated from the liquid reaction medium, washed at least once with an inert hydrocarbon of up to 10 carbon atoms to remove unreacted titanium compounds, and dried. Exemplary of the inert hydrocarbons that are suitable for the washing are isopentane, isooctane, hexane, heptane and cyclohexane.

The final washed product generally has a titanium content of from 1.5 percent by weight to 6.0 percent by weight, preferably from 2.0 percent by weight to 4.0 percent by weight. The atomic ratio of titanium to magnesium in the final product is typically between 0.01:1 and 0.2:1, preferably between 0.02:1 and 0.1:1.

The cocatalyst can be an organoaluminum compound which is selected from the aluminum-based cocatalysts conven-tionally employed with titanium-based procatalysts. Illustrative organoaluminum compounds are trialkylaluminum compounds, alkylaluminum alkoxide compounds and alkylaluminum halide compounds wherein each alkyl independently has from 2 to 6 carbon atoms. The preferred organoaluminum compounds are halide-free and particularly preferred are the trialkylaluminum compounds such as triethylaluminum, triisobutylaluminum, triisopropylaluminum and diethylhexylaluminum. Triethylaluminum is especially preferred. The cocatalyst is generally employed in a sufficient quantity to provide a ratio of aluminum atoms to titanium atoms in the pro-catalyst from 1:1 to 300:1 but preferably from 10:1 to 100:1.

The organoaluminum cocatalyst should generally be employed in sufficient quantity to provide from 1 mole to about 150 moles of aluminum per mole of titanium in the procatalyst. It is preferred that the cocatalyst is present in sufficient quantities to provide from 10 moles to about 100 moles of aluminum per mole of titanium in the procatalyst.

The selectivity control agents which are employed in the production of the olefin polymerization catalyst are those conventionally employed in conjunction with titanium-based procatalysts and organoaluminum cocatalysts. Suitable selectivity control agents include those electron donors as listed above for use in procatalyst production but also include organosilane compounds such as alkylalkoxysilanes and arylalkoxysilanes of the formula

R'ᵣSi(OR)₄₋ᵣ

wherein R' is alkyl or aryl of up to 32 carbon atoms conclusive, R is lower alkyl of up to 4 carbon atoms and r is 0 to 3.

Illustrative of the suitable selectivity control agents are esters such as ethyl p-ethoxybenzoate, diisobutyl phthalate, ethyl benzoate and ethyl p-methylbenzoate, and organosilanes such as diisobutyldimethoxysilane, n-propyltrimethoxysilane, isopropyltrimethoxysilane, ethyltriethoxysilane, octadecyltriethoxysilane, octadecyltrimethoxysilane, and cyclohexylmethyldimethoxysilane. The selectivity control agent is typically provided in a quantity sufficient to provide from 0.01 mole to 100 moles per mole of titanium in the procatalyst. It is preferred that the selectivity control agent is provided in a quantity sufficient to provide from 0.5 mole to 70 moles per mole of titanium in the procatalyst, with 8 moles to 50 moles being more preferred.

The manner by which the solid procatalyst precursor, tetravalent titanium halide, the optional inert diluent and the electron donor are contacted is material but not critical and is generally conventional. In one embodiment the procatalyst precursor and the tetravalent titanium halide are mixed and the electron donor is subsequently added to the resulting mixture. In another embodiment, the electron donor and procatalyst precursor are mixed with the tetravalent titanium halide or a mixture of tetravalent titanium halide and optional inert diluent and the resulting solid is contacted one or more additional times with tetravalent titanium halide or the mixture of tetravalent titanium halide and optional inert diluent. The initial contacting of electron donor, procatalyst precursor and tetravalent titanium halide or the tetravalent titanium halide/optional inert diluent mixture is suitably conducted at a temperature from ambient to 150°C. Better interaction of these materials is obtained if they are heated and initial contacting temperatures from 70°C to 130°C are preferred, with temperatures from 75°C to 110°C being more preferred.

During each contacting with tetravalent titanium halide a portion of the inert diluent is optionally present and the reaction is facilitated on some occasions by the additional presence of an acid halide such as benzoyl chloride or phthaloyl chloride. The solid procatalyst, usually obtained as spherical particles, is typically finished by a final wash with an inert hydrocarbon of up to 10 carbon atoms and drying under nitrogen. Exemplary of the inert hydrocarbons that are suitable for the washing are isopentane, isooctane, hexane, heptane and cyclohexane.

The particular type of polymerization process utilized is not critical to the operation of the present invention and the polymerization processes now regarded as conventional are suitable in the process of the invention. The polymerization is conducted under polymerization conditions as a liquid phase or as a gas-phase process employing a fluidized catalyst bed or as a gas-phase process utilizing some condensed monomer.

The polymerization conducted in the liquid phase generally employs as reaction diluent an added inert liquid diluent or alternatively a liquid diluent which comprises the olefins, i.e., propylene and butene-1, undergoing polymerization. Typical polymerization conditions include a reaction temperature from 25°C to 125°C, preferably 35°C to 100°C especially 75°C to 90°C being most preferred, and a pressure sufficient to maintain the reaction mixture in a liquid phase. Such pressures are typically from 1034kPa (150 psi) to 8274kPa (1200 psi), with pressures from 1724kPa (250 psi) to 6205kPa (900 psi) being preferred. The liquid phase reaction is operated in a batchwise manner or as a continuous or semi-continuous process. Subsequent to reaction the polymer product can be recovered by conventional procedures. The precise control of the polymerization conditions and reaction parameters of the liquid phase process are within the skill of the art.

As an alternate embodiment of the invention, the polymerization may be conducted in a gas phase process in the presence of a fluidized catalyst bed. One such gas phase process polymerization process is described in Goeke et al, U.S. Patent 4,379,759, incorporated herein by reference, involves a fluidized bed, gas phase reaction. A gas phase process typically involves charging to a reactor an amount of preformed polymer particles, and lesser amounts of catalyst component. The olefins, i.e., propylene and butene-1, to be polymerized, are passed through the particle bed at a rate sufficient to initiate polymerization. The molar ratio of butene-1 to propylene in the gas mixture is typically from 0.01 to 0.30. When a butene-1 and propylene binary random copolymer having 0.5% to 6.5% of butene-1 by weight is to be made, the molar ratio of butene-1 to propylene in the gas phase is typically 0.01 to 0.13, preferably 0.02 to 0.12, with 0.06 to 0.08 being more preferred.

Upon passing through the particle bed, the unreacted gas can be withdrawn from the reactor and recycled together with make-up feed gas. As catalyst is lost through incorporation of minute amounts of catalyst within the polymer product, additional catalyst can be provided to the reactor, often through the use of an inert transport medium such as mineral oil, nitrogen or argon. The reaction temperature is selected to be below the sintering temperature of the polymer particles and can be controlled by an external heat exchanger in a gas cycle loop. Reaction temperatures from 30°C to 90°C may typically be used, with reaction temperatures from 50°C to 85°C being preferred, from 50°C to 70°C being more preferred, and from 55°C to 65°C being most preferred.
The reaction pressure is generally up to 4137kPa (600 psi) although reaction pressures from 552kPa (80 psi) to 4137kPa (600 psi) are preferred, with reaction pressures from 2068kPa (300 psi) to 2758kPa (400 psi) being most preferred. The precise control of reaction conditions as well as the addition of catalyst and feed gas and the recycle of unreacted monomer is within the skill of the art.

In both the liquid phase and the gas-phase polymerization processes, molecular hydrogen can be added to the reaction mixture as a chain transfer agent to regulate the molecular weight of the reactor polymeric product. The precise control of reaction conditions, and the rate of addition of feed component and molecular hydrogen is broadly within the skill of the art.

The desired reactor polymeric products can be obtained as particulate matter formed by growth of polymer product on the polymer particles provided to the fluidized bed or as particles formed in the reactor. The polymer particles can be removed from the reactor at a rate which is substantially equivalent to the rate of polymer production and the particles are passed to a subsequent reaction zone or are finished by conventional methods prior to use.

The polymers produced are random copolymers which are generally predominantly isotactic in structure. It is preferred that the random copolymers are at least 70% isotactic in structure, especially at least 85%. Polymer yields are high relative to the amount of catalyst employed. The random copolymer can be a binary random copolymer of 1-butene and propylene.

In the first specific embodiment of the present invention, the polymer compositions comprise 0.5% to 6.5%, preferably 0.8 to 5.5%, more preferably 1% to 5%, and most preferably 1.3% to 3%, of butene-1 by weight. The polymer compositions typically have one or more of the following charisterics (A) to (H):
(A) A haze, as measured by ASTM D-1003, of up to 3.0%, preferably up to 2.0%, more preferably up to 1.5%, and most preferably up to 1.0%. Haze (degree of cloudiness or milkiness) is a measure of the transparency and is measured as the percentage of light transmittance. The presence of various additives such as silica can adversely affect haze values if the particle size of the silica is larger than the wavelength of the light. Further, the thickness of the film has an affect on the haze value, e.g. as film thickness increases, the haze value increases;
(B) A hexane extractable content at 50°C, as measured according to 21 C.F.R. 177.1520(C)(3.1 and 3.2), of up to 2.6%, preferably up to 2.0%, and more preferably up to 1.5%;
(C) A xylene solubles level at 23°C, measured according to 21 C.F.R. 177.1520, of up to 6%, preferably 5.5%, more preferably up to 4.5%. The xylene soluble portion consists primarily of amorphous (atactic) polymer and semicrystalline polymer;
(D) A tangent modulus, as measured according to ASTM D882 (1% secant at 0.13cm/min (0.05 inches/min)), of at least 14,060 kg/cm², (200,000 psi), preferably at least 21,100 kg/cm², (300,000 psi), more preferably at least 26,400 kg/cm², (375,000 psi);
(E) A melting point from 144°C to 158°C, preferably from 148°C to 158°C, more preferably from 152°C to 158°C;
(F) A gloss, as measured according to ASTM D-523 at 60°, from 140 to 155, preferably from 143 to 150, most preferably from 145 to 150;
(G) A tensile strength, as measured by ASTM D 638 for machine direction (MD), of at least 1195 kg/cm² (17,000 psi), preferably at least 1547 kg/cm² (22,000 psi) and most preferably at least 1758 kg/cm² (25,000 psi); and
(H) An elongation at break from 80% to 200%.

Such random copolymers when produced by typical gas phase processes will usually have melt flows, expressed Ln dg/min as determined by a conventional test procedure such as ASTM-1238, Cond. L, of from 1 to 4, preferably from 1.5 to 3.9, and more preferably from 2.0 to 3.0. Optical properties of the random composition copolymer are improved with higher melt flow.

According to one specific aspect of the first embodiment of the invention, the random copolymer resin is treated with peroxide at elevated temperatures, e.g. above 180°C. Such peroxide treatment procedure, also termed "visbreaking", is well within the skill of the art and can be used to adjust the melt flow of the reactor polymer products as desired.

The visbroken polymer products used in this invention can be obtained by visbreaking the polymer compositions of the present invention that have a melt flow of at least 1.5 dg/min. The melt flow ratio of the resulting visbroken product to the starting non-visbroken polymer product is at least 1.5, preferably at least 2.0, more preferably at least 2.5.

The polymer compositions of this specific embodiment of the invention as well as the visbroken derivatives thereof are characterized by a balance of improved low heat seal initiation temperatures, low hexane extractables, good stiffness, and good optical properties, such as low haze, low yellowing and low bloom.

According to another specific aspect of the first specific embodiment of the invention, the composition incorporates an additive package comprising 0.04% to 0.06% by weight of tetrakis-[methylene(3,5-di-tert-butyl-4-hydroxyhydrocinnamate)]-methane, 0.05% to 0.11% by weight of bis(2,4-di-tert-butylphenyl)-pentaerythritol diphosphite, and 0.01% to 0.04% by weight of magnesium aluminum hydroxy carbonate hydrate, each based on the weight of total copolymer.

The compositions of the first specific embodiment can be further processed by conventional procedures used for the production of biaxially oriented polypropylene films, such as flat biaxial stretching, or tubular biaxial stretching and the like. Stretching temperatures can be from ambient temperature to the melting point of the copolymer, preferably from 130°C to 155°C. The stretch ratio is desirably at least 2:1, preferably at least 5:1, more preferably at least 6:1, most preferably at least 9:1.

According to another aspect of the first specific embodiment of the invention, the random copolymer is used as a base substrate layer with a polymeric heat sealable layer on at least one outer surface of the substrate layer in the production of a film laminate. The substrate layer and the polymeric layer can be coextruded. Other methods can be used including the well-known "Wolfe" process in which prefabricated layers of the polymeric layer are heat bonded to the substrate layer.

The heat-sealable polymeric surface layer can be derived from an ethylene-propylene-butene-1 terpolymer, an ethylene-propylene (EP) random copolymer, a propylene-butene-1 copolymer, an ethylene-butene-1 copolymer, or blends thereof, for example. Suitable terpolymers include those obtained from the random inter-polymerization of from 1% to 8% by.weight ethylene, preferably from 3% to 5% by weight ethylene, with from 65 to 95 by weight% propylene, preferably from 86 to 93% propylene, and butene-1 representing the balance. These terpolymers generally possess a melt index at 230°C of from 2 to 7 and advantageously from 3 to 7, a crystalline melting point of from 100°C to 130°C, an average molecular weight of from 25,000 to 100,000 and a density from 0.89 to 0.92 gm/cm³.

Suitable EP random copolymers for the heat sealable polymeric surface layer generally contain from 2% wt. to 7% wt. ethylene, the balance being made up of propylene, a melt index at 230°C, generally ranging from 2 to 7 and preferably from 3 to 8. The crystalline melting point is usually from 125°C to 140°C and the number average molecular weight range is from 25,000 to 100,000. The density is usually from 0.89 to 0.92 gm/cm³.

Suitable propylene-butene-1 copolymers for the heat sealable polymeric surface layer generally contain from 7.0% weight (wt.) to 15% weight (wt.) butene, the balance being propylene. Such propylene-butene-1 copolymers have (a) a low heat seal initiation temperature, e.g. 105°C to 140°C, preferably from 105°C to 110°C; (b) a haze, of no more than 6%, preferably of no more than 4%; (c) a modulus, as measured according to ASTM D882, of at least 4218 kg/cm² (60,000 psi), preferably of at least 5625 kg/cm² (80,000 psi); and (d) hexane extractable content at 50°C, as measured according to 21 CFR 177 1530 (c) (3.1 and 3.2), of up to 5.5%, preferably 3.5%, with up to 2.6% being more preferred.

In general, where blends of terpolymer and random copolymers are used for the heat sealable polymeric surface layer, the blends will contain from 10 wt% to 90 wt% terpolymer and preferably from 40 wt% to 60 wt% terpolymer, the balance being made up of random copolymer.

According to another aspect of the first specific embodiment of the invention, the random copolymer composition is suitable for metallization, i.e. metallized random copolymer film. The random copolymer for metallized films has surface tension properties (wetting index) of at least 50 mN/m (50 dynes/cm) after corona discharge treatment of the film surface. It is preferred that the random copolymer has a wetting index of at least 60 mN/m (60 dynes/cm). It is noted that homopolymer films typically have surface tension properties of in the range of 40-42 mN/m (40 to 42 dynes/cm) after corona discharge.

Metallization of the random copolymer composition of the first specific embodiment of the present invention can occur using any known metallization process, such as corona discharge or vacuum metallization. The random polymer film can be subjected to corona discharge treatment onto the surface to be metallized, followed by metallizing in vacuum. This corona discharge treatment may be carried out an appropriate time after the formation of the random copolymer, but it is preferred that the metallization treatment occur at a point between the formation of film and film take-up.

It is preferred to carry out the corona discharge so as to give a wetting index of at least 50 mN/m (50 dyn/cm), with at least 55 mN/m (55 dyn/cm) being more preferred. Optionally, an adhesion means is employed to strengthen the adhesion between the random copolymer film and the desired metal. Suitable adhesion means include polyesters, polyurethanes, and epoxy resins. The adhesion means can be coated onto the surface of the random copolymer film to be subjected to corona discharge. The adhesion means, of course, may be employed simultaneously with the metallization.

Any known process for vacuum-metallizing may be employed, typically using apparatus provided with a delivery part, a metallizing part and a take-up part for the film. Atmospheric pressure inside the apparatus is reduced to say about 1cPa (10⁻⁴ Torr) or less by simultaneously employing an oil pump and a diffusion pump. A vessel containing a desired metal such as aluminum or filaments having a desired metal attached thereto, is heated to melt and vaporize the metal. The vaporized molecules of the metal are continuously deposited onto the surface of the delivered film, followed by take-up. The thickness of the metallized layer is usually 0.01 to several µm (microns).

The second specific embodiment of the present invention relates to a polymer composition of (1) a predominantly isotactic random copolymer consisting essentially of from 0.8% to 20%, preferably from 5% to 18%, more preferably 7% to 14.5%, and most preferably 7.5% to 10.0%, by weight of butene-1 units, and 80% to 99.2%, preferably from 82% to 95%, by weight of propylene units; and (2) at least one clarity/gloss enhancing amorphous silica antiblock agent. The resulting polymer product i.e., film, generally has a clarity, as measured according to ASTM D-1746, of at least 8% and a gloss (60°), as measured according to ASTM D-523, of 129 to 145. Optionally, the polymer composition includes an additive package which reduces yellowing. The synthetic amorphous silica can have, in general, a platy morphology, a relatively high bulk density in the range from 300 to 360 gm/liter, and a low oil absorption in the range from 80 to 100 gm/100 gm. The synthetic amorphous silica antiblock agent is used in an amount ranging from 0.05% to 0.35% by weight of copolymer composition, preferably 0.07% to 0.25% by weight, 0.10 to 0.20% being more preferred, with 0.13 to 0.17% being most preferred.

According to a specific aspect of the second specific embodiment of the present invention, the polypropylene random copolymer composition incorporates an additive package comprising from 0.03% to 0.10% by weight of composition tetrakis[methylene(3,5-di-tert-butyl-4-hydroxyhydrocinnamate)]methane, from 0.05% to 0.11% by weight of bis (2,4-di-tert-butylphenyl)pentaerythritol diphosphite, and from 0.01% to 0.04% by weight of magnesium aluminum hydroxy carbonate hydrate, each based on the weight of total copolymer composition.

The polymer compositions of the second specific embodiment preferably have one or more of the following characteristics (A) to (I):
(A) Elongation at break, as measured according to ASTM D882, in the range of 400% to 2000%, preferably a range of 600% to 1500 %, with a range from 700% to 1400% being more preferred;
(B) A hexane extractable content at 50°C, as measured according to 21 C.F.R. §177.1520 (c) (3.1 & 3.2), of up to 5.5%, preferably up to 3.5%, up to 2.6% being more preferred, and up to 2.0% being most preferred;
(C) A xylene solubles level at 23°C, as measured according to 21 C.F.R. 177.1520, of up to 13%, preferably up to 6%, with up to 5% being more preferred, and up to 3% being most preferred;
(D) A tensile modulus, as measured according to ASTM D882 (1% secant at 0.13cm/min (0.05 inches/min)), of at least 2812 kg/cm² (40,000 psi), preferably of at least 4218 kg/cm² (60,000 psi), with at least 5625 kg/cm² (80,000 psi) being more preferred, and a modulus of at least 7031 kg/cm² (100,000 psi) being most preferred;
(E) A haze, as measured by ASTM D-1003, of up to 5%, with a haze of up to 3% being preferred, a haze of up to 2.5% being more preferred; haze is a measure of milkiness or cloudiness of the film.
(F) A gloss, as measured according to ASTM D-523 (60°), in the range from 129 to 145, with a range from 131 to 144 being preferred, with a range from 136 to 142.5 being more preferred (gloss correlates with the shininess or sparkle of the film);
(G) A yellowness index of pellets, as measured according to ASTM D-1925, of up to -1.2, preferably up to -0.5, with up to -0.1 being more preferred and up to 0.05 being most preferred;
(H) A clarity, measured by ASTM D-1746, of at least 8%, with a clarity of at least 11% being preferred and a clarity of at least 13% being most preferred. Higher clarity numbers correlate with observance of a clearer image of an object when viewed through a film. Clarity is a measure of the light that is scattered less than 0.1 degree upon passing through the film; and
(I) Coefficient of friction (COF), both static and kinetic, measured according to ASTM D-1894, of up to - 0.30, with a COF of up to 0.20 being preferred.

The polymer compositions as described above when produced by typical gas phase processes will have melt flows, as determined by a conventional test procedure such as ASTM-1238, Cond. L, of from 0.8 dg/min to 50 dg/min. A melt flow of from 1 dg/min to 25 dg/min being preferred and from 3 dg/min to 20 dg/min being more preferred.

As a specific aspect of the second specific embodiment of the invention, the polymer compositions are contacted at elevated temperatures, e.g., above 180°C, with peroxide. The treatment is termed "visbreaking" and the procedures thereof are within the skill of the art. Visbreaking can be used to increase the melt flow of the reactor polymer product as desired.

The visbroken polymer products of this invention are obtained by visbreaking the polymer compositions of the present invention that have a melt flow of at least 0.8 dg/min. The melt flow ratio of the resulting visbroken product to the starting non-visbroken polymer product is at least 2, a melt flow ratio of 5 is preferred, with a melt flow ratio of 8 being more preferred.

The polymer compositions of the second specific embodiment of the present invention as well as the visbroken derivatives thereof are characterized by an excellent balance of improved low hexane extractables, good gloss, good clarity, low yellowness index and low haze.

These compositions can be processed by conventional procedures used for thermoplastic materials such as extrusion, injection molding and thermoforming and related processes. Among particular applications for the compositions are the production of oriented or unoriented films by casting or film blowing methods. After fabrication, the film can be heat sealed by sealing jaws at a preset temperature, pressure and dwell time. The resulting film has lower heat seal initiation temperatures, low hexane extractables and improved optical properties such as high transparency, high gloss and low yellowness index.

Suitable synthetic amorphous silica antiblock additives include Gasil® AB720, which is available from Crosfield Group of Warrington, England. In contrast, a conventional amorphous silica which is not generally suitable is Sylobloc 48 (W. R. Grace Company); this typically has a bulk density of 128 gm/liter and oil absorption of 220 gm/100 gm, with spheroidal particle morphology.

The copolymer composition of this invention optionally incorporate additives such as processing stabilizers, antioxidants, ultraviolet stabilizers, pigments, acid neutralizing agents, such as magnesium aluminum hydroxycarbonate hydrate, acid acceptors, slip agents, such as erucamide, nucleating agents, mold release agents, and dispersants, acid, if not present, antiblock agents such as amorphous silica which are conventionally employed in commercial polymer compositions provided they do not adversely affect the good optical properties and low yellowness of the compositions.

Examples of processing stabilizers which can be used include bis(2,4-di-tert-butylphenyl)-pentaerythritol diphosphite, tetrakis[2,4-di-tert-butyl-phenyl]4-4'-biphenylylene diphosphonite, tris(2,4-di-tert-butylphenyl)phosphite; antioxidants such as n-octadecyl-3-(4'-hydroxy-3',5'-di-tert-butylphenyl)-propionate, tetrakis-[methylene(3,5-di-t-butyl-4-hydroxyhydrocinnamate)methane, tris(3,5-di-tert-butyl-4-hydroxybenzyl)isocyanurate,pentaerythritol-tetrakis-(β-laurylthiopropionate) and distearyl thiodipropionate.

Typical ultraviolet stabilizers include 2-hydroxy-4-n-octoxy-benzophenone,2-(2-hydroxy-3,5-di-butyl-phenyl)-5-chlorobenzene triazole, dimethyl suc-cinate-2-(4-hydroxy-2,2,6,6-tetramethyl-1-piperidyl)ethanol condensate.

Typical acid acceptors are hydrotalcite DHT-4A, calcium stearate and calcium lactate.

The invention described herein is illustrated, but not limited by the following Illustrative Embodiments and Comparative Examples. The following terms are used throughout the Illustrative Embodiments and Comparative Examples:
SCA (Selectivity Control Agent)
NPTMS (n-propyltrimethoxysilane)
PEEB (ethyl p-ethoxybenzoate)

### Illustrative Embodiment I

### A.) Preparation of Procatalyst

To a 50/50 solution (vol/vol) of 2953 liters of titanium tetrachloride and chlorobenzene, are added, in succession, 50 kg of diisobutyl phthalate, and 231 kg of carbonized magnesium ethoxide. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a 50/50 (vol/vol) solution of 2953 liters of titanium tetrachloride and chlorobenzene at room temperature. The resulting slurry is then heated to 110°C with stirring, the temperature being maintained for 60 minutes. At the end of this time, the mixture is filtered while hot. A solid material is collected.

The solid material is reslurried in 2953 liters of the 50/50 (vol/vol) solution. The resulting slurry is heated to 110°C with stirring and the temperature being maintained for 30 minutes. At the end of this time, the mixture is filtered while hot. A solid material is collected.

The residue is washed once with 2271 liters of isopentane at 25°C and then dried under a nitrogen purge.

### B.) Polymerization

The procatalyst of section A was continuously fed into a gas phase fluidized bed reactor as a 30% by weight dispersion in mineral oil. Simultaneously and continuously, triethylaluminum and a selectivity control agent ("SCA" = NPTMS) were introduced to the reactor. Sufficient hydrogen was introduced to regulate the molecular weight of the polymer product. A small amount of nitrogen is also present. The partial pressure of propylene was from about 965 kPa (140 psi) to about 2620 kPa (380 psi). The polymerization temperature was 65°C and the residence time was from 1½ to 2 hours.

### Illustrative Embodiment II

### A.) Preparation of Procatalyst

To a 50/50 solution (vol/vol) of 3558 liters of titanium tetrachloride and chlorobenzene, are added, in Succession, 51 kg of diisobutyl phthalate, and 150 kg of magnesium diethoxide. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a 50/50 (vol/vol) solution of 3558 liters of titanium tetrachloride and chlorobenzene at room temperature. The resulting slurry is then heated to 110°C with stirring, the temperature being maintained for 60 minutes. At the end of this time, the mixture is filtered while hot. A solid material is collected.

The solid material is reslurried in 3558 liters of the 50/50 (vol/vol) solution. The resulting slurry is heated to 110°C with stirring and the temperature being maintained in 30 minutes. At the end of this time, the mixture is filtered while hot. A solid material is collected.

The residue is washed four times with 3785 liter portions of isopentane at 25°C and then dried under a nitrogen purge.

### B.) Polymerization

The procatalyst of section A was continuously fed into a fluidized bed reactor as a 30% by weight dispersion in mineral oil. Simultaneously and continuously, triethylaluminum, as a 5% by weight solution in isopentane, and a selectivity control agent ("SCA" = NPTMS), as a 0.5 to 5 percent solution in isopentane, were introduced to the reactor. Sufficient hydrogen was introduced to regulate the molecular weight of the polymer product. A small amount of nitrogen is also present. The partial pressure of propylene was from about 965 kPa (140 psi) to about 2068 kPa (300 psi). The polymerization temperature was 65°C or 80°C and the residence time was from 2 hours to about 4 hours.

### Comparative Example I

The same procedure used in Illustrative Embodiment I was repeated except ethylene was substituted for butene-1. The results of a series of polymerizations are shown in TABLES 1 and 2.

### Comparative Example II

(a) Preparation of Procatalyst Component
   The procatalyst was prepared by adding magnesium diethoxide (50 mmol) to 150 ml of a 50/50 (vol/vol) mixture of chlorobenzene/TiCl₄. After adding ethyl benzoate (16.7 mmol), the mixture was heated in an oil bath and stirred at 110°C for approximately 30 minutes, the mixture was filtered. The slurry was washed six times with 150 ml portions of isopentane and then dried for 90 minutes, at 30°C, under nitrogen.
(b) Polymerization
   Using the above-described procatalyst (section a), propylene and ethylene were polymerized, in the same manner, as described in Illustrative Embodiment I, section (b), except the selectivity control agent was PEEB.

### Comparative Example III

Using the procatalyst of Illustrative Embodiment I(a), propylene was polymerized as described in Illustrative Embodiment I, (b).

The resulting copolymer products of Comparative Examples I, II and III were cast into films of various thickness as described in Illustrative Embodiment III. The results are furnished in TABLES 1 and 2.

### Illustrative Embodiment III

Film Casting of Polymer Products

Some of the polypropylene products, produced according to Illustrative Embodiments I and II and Comparative Examples I II and III, were recovered by conventional means. Some of the recovered products were mixed with one of the following additives packages:
A) 1000 ppm of Irganox® 1010 hindered phenolic primary antioxidant available from Ciba Geigy Corporation, 1000 ppm of Irgafos® 168 phosphite secondary antioxidant available from Ciba Geigy Corporation, 400 ppm of Hydrotalcite DHT-4A acid neutralizer available from Kyowa Chemical Industry.
B) 500 ppm of Irganox® 1010, 800 ppm of Ultranox® 626 and secondary phosphite stabilizer available from General Electric Specialty Chemicals and 200 ppm of Hydrotalcite DHT-4A.

After the recovered products were mixed with one of the above-described additive packages, some of the resultant mixtures were visbroken with sufficient peroxide to obtain the desired melt flow and then pelletized.

The pelletized polymer products (either visbroken or non-visbroken) were cast into film according to the following procedure:

The pellets were extruded into a 0.13cm (0.05 inch) thick sheet using a 6.3cm (2½") diameter extruder (24:1 L/D ratio) at a melt temperature of 250°C; speed of about 100rpm, and head pressure of 13790 kPa (2,000 psi). A 30.5 cm (12") wide die and 33 cm (13") diameter chill roll with a waterbath with temperatures of 25°C were used. After the sheet was cooled, it was reheated in the machine direction orientation (MDO) section at 120°C roll temperatures, and stretched at 5.5:1 ratio. The sheet was then passed through the transverse direction orientation (TDO) section where the preheat section had a temperature of 175°C, the stretching zone had a temperature of 160°C, and the annealing zone had a temperature of 162°C. The web was stretched in the transverse direction at a stretch ratio of 8.5:1.

The melting temperature" (°C) is obtained from a differential scanning calorimetry curve for each polymer product produced.

The other properties of the random copolymer composition were measured as follows:

| | |
|---|---|
| Elongation (%) | ASTM D638 (23°C) |
| Melt Flow | ASTM D1238.78, Cond. L |
| Haze | ASTM D1003 |
| Gloss (at 60°) | ASTM D2457 |
| Modulus (1% secant at | ASTM D790A |
| 0.13 cm/min (0.05 inches/min)) | |
| Tensile Strength at Break | ASTM D638 |

The results of a series of polymerizations are shown in TABLES 1 and 2.

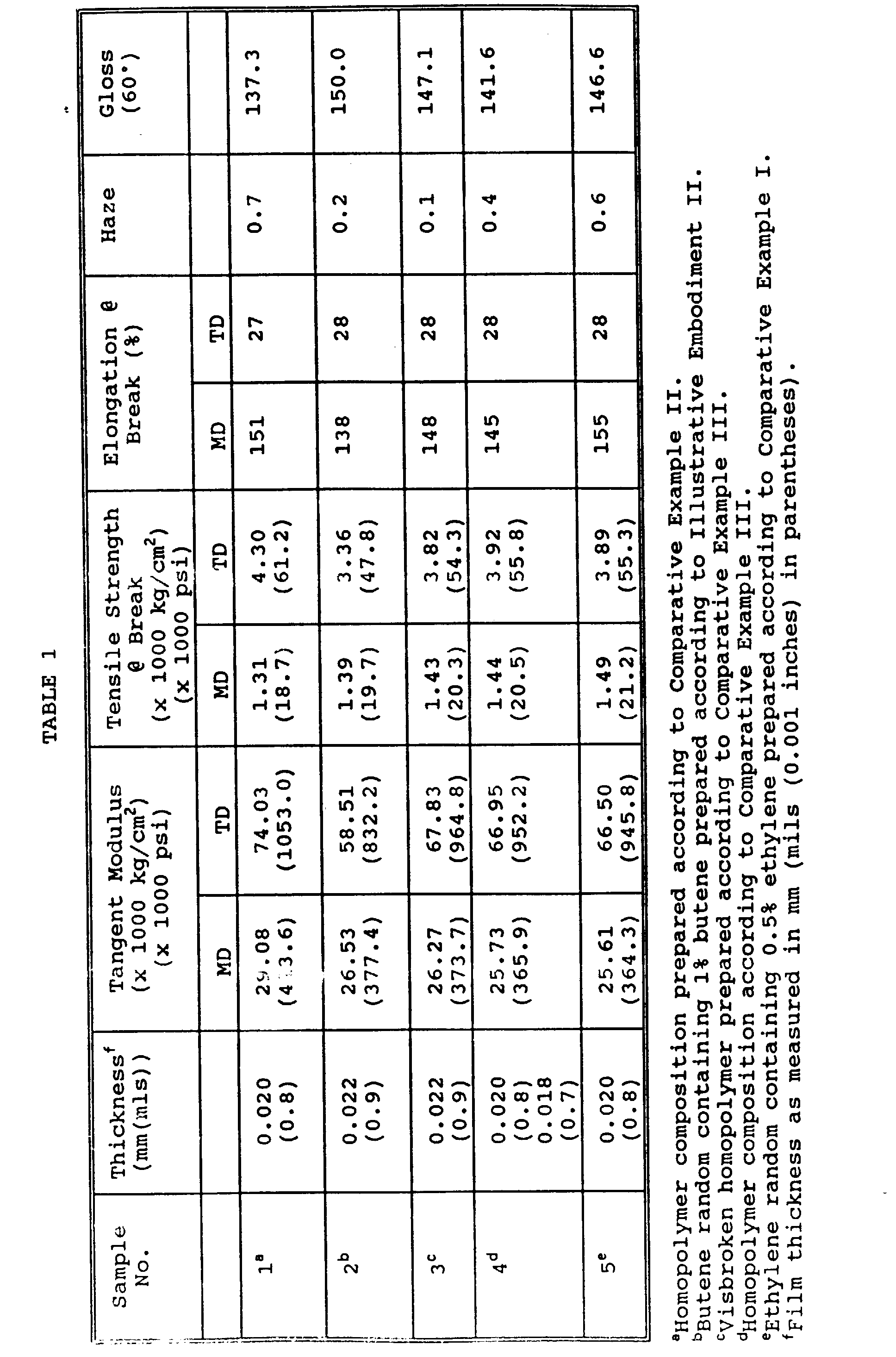

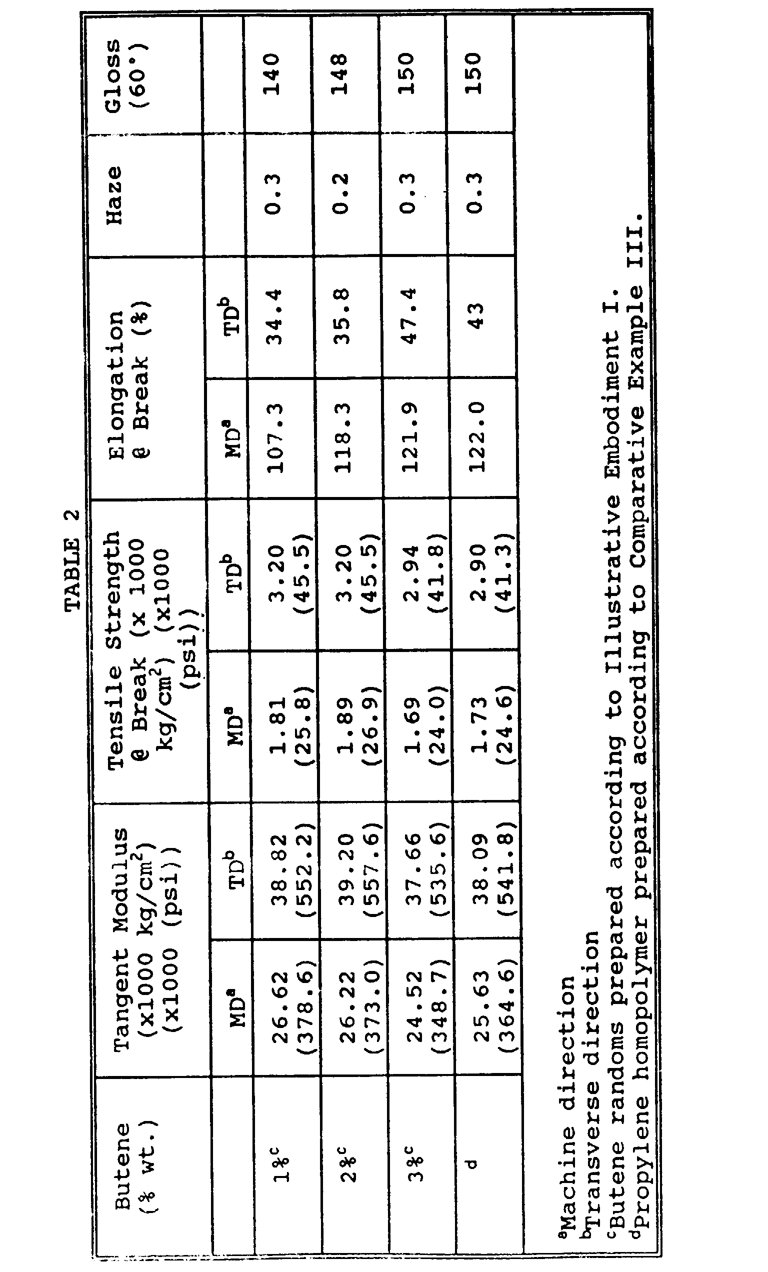

### Illustrative Embodiment IV

Some of the polymer reactor products, produced according to Illustrative Embodiment I, (propylene/butene-1 random copolymer with about 7% by weight butene-1 and melt flow of 3.4, as measured by ASTM D-1238 Cond. L) were mixed and pelletized with an additive package of Irganox® 1010 (500 ppm) phenolic primary antioxidant available from Ciba Geigy Corporation, Ultranox® 626 secondary phosphite stabilizer available from General Electric Specialty Chemicals (800 ppm), Hydrotalcite DHT-4A acid neutralizer (200 ppm) available from Kyowa Chemical Industry, Kemamide® E erucamide (1000 ppm) available from Witco Corporation, and one of the following antiblock additives:
A) SYLOBLOC® 48 silica antiblock additive available from W. R. Grace (conventional silica).
B) GASIL® AB720 synthetic amorphous silica antiblock additive which is available from Crosfield. The average particle size of each silica was about 4 micrometers.

Compounding was done using a 1¼ inch Brabender extruder with a Maddock mixing screw, under nitrogen and 250°C melt temperature.

The pellets were extruded into 0.089 mm (3.5 mil) thick cast film using a 1.9 cm (3/4 inch) Brabender extruder (200°C melt temperature) with 20.3 cm (8 inch) wide die and a 25.4 cm (10 inch) Killion chill roll (15°C). Operating conditions for all polymer formulations were the same. The test results for the films produced are provided in TABLE 3.

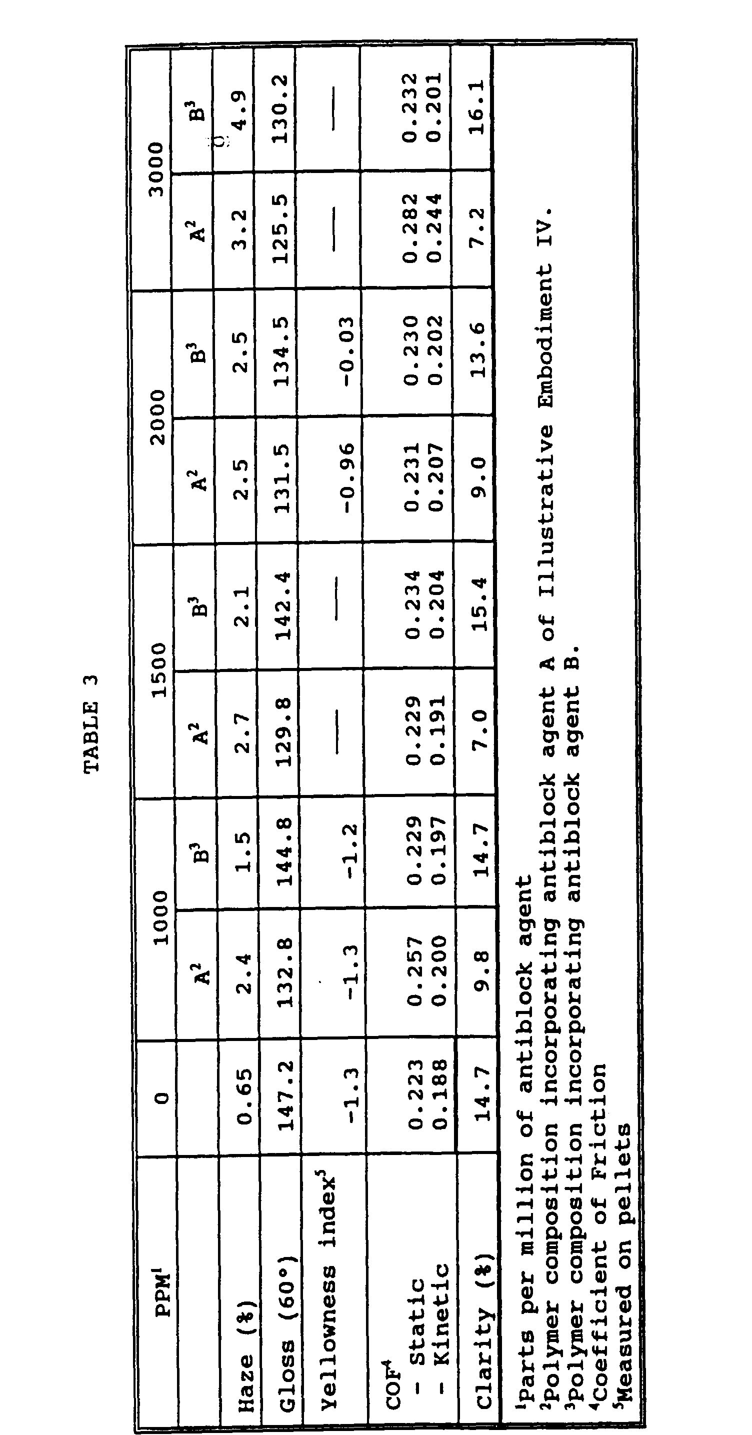

As noted in TABLE 3, the polymer film compositions incorporating antiblock additive B at various levels exhibit high clarity and higher gloss in comparison to the polymer film using antiblock additive A. It is also noted that the pellets from composition utilizing antiblock B exhibited a yellowness index similar to the pellets using antiblock additive A.

### Illustrative Embodiment V

Formulations of Table 4 were compounded as follows. The base resin was propylene-butene random copolymer of nominal 1.5 melt flow and 7.5 %w butene comonomer content. This unstabilized powder was compounded with 0.05%w Irganox 1010, 0.08 %w Ultranox 626, 0.02% hydrotalcite DHT-4A, 0.15 %w silica antiblock agent (Gasil AB 720 or for comparison, Sylobloc 48) and variable levels of Kemamide® E (erucamide) slip agent. Lupersol 101 peroxide (250 ppm) was used in all formulations to chemically crack (or degrade) the powder to 8 melt flow (MF) pellets.

Compounding was done using a 3.17 cm (1¼ inch) Brabender extruder with Maddock mixing screw under nitrogen at 230°C melt temperature and 100 RPM screw speed.

The pellets were extruded into 100 µm (4 mil) thick cast film, using a 1.90 cm (¾ inch) Brabender extruder at 234°C melt temperature, 65 RPM screw speed, 20.3 cm (8 inch) wide slot die and Killion chill roll (15°C).

Table 4 shows the properties of the films produced. The film which incorporated Gasil AB 720 shows higher clarity and higher gloss than film incorporating Sylobloc 48. Also, at a given concentration of slip agent, film incorporating Gasil AB 720 show a lower coefficient of friction (COF) than film that incorporated Sylobloc 48. A lower COF correlates to lower slip additive requirement. This is beneficial, since higher concentrations of slip agent cause plate-out and die deposit in film extrusion operation.

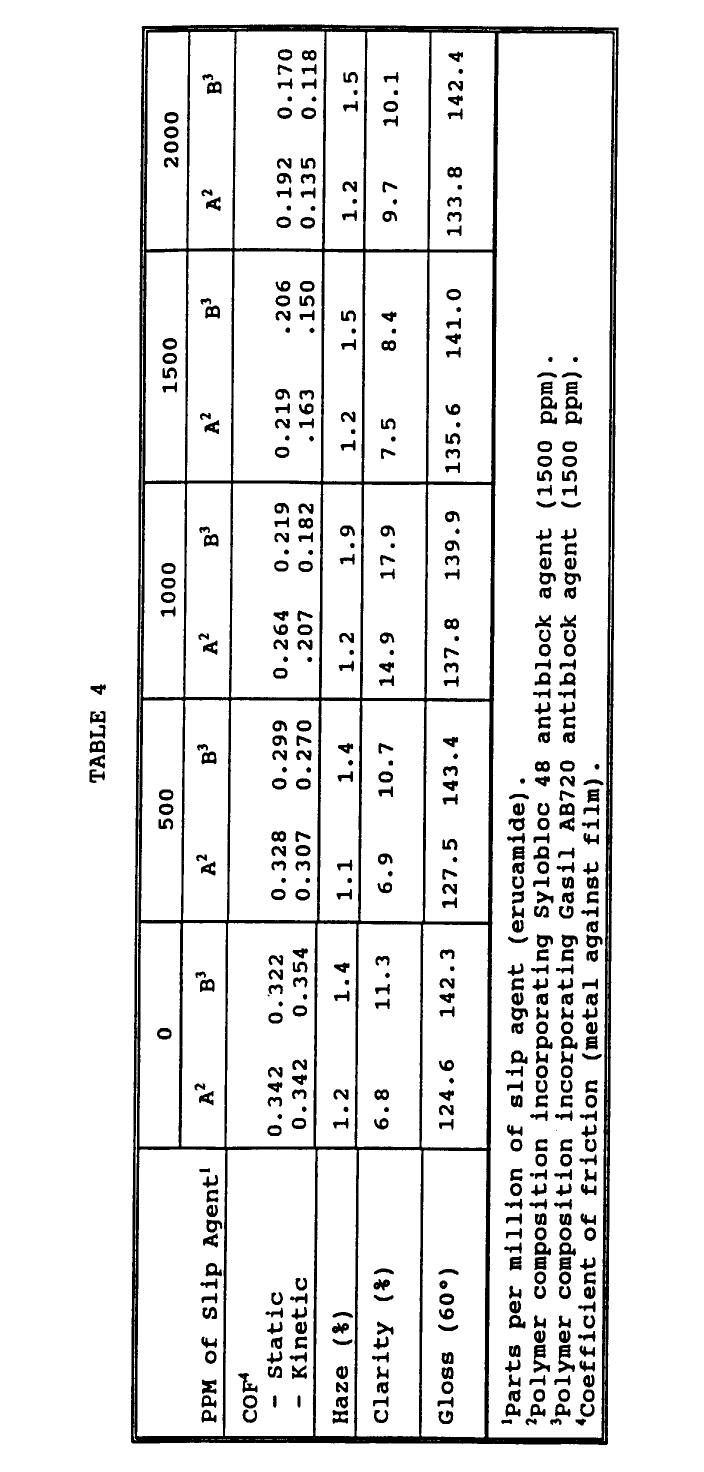

It is further observed in Tables 3 and 4, that platy silica provides lower coefficient of friction in film, as compared to conventional silica.

## Claims

1. A polymer composition comprising (i) a random copolymer comprising from 0.5% to 20% by weight of butene-1 and from 80% to 99.5% by weight of propylene, and (2) from 0%-0.35% by weight of the polymer composition of a synthetic amorphous silica antiblock agent; wherein said synthetic amorphous silica antiblock agent has a bulk density in the range from 300 to 360 gm/liter and an oil absorption in the range from 80 to 100 gm/100 gm; wherein said polymer composition has:
(a) a hexane extractable at 50°C of up to 5.5%,
(b) a haze of up to 5%,
(c) a xylene soluble level at 23°C of up to 13%,
(d) a tensile modulus of at least 2812 kg/cm² (40,000 psi); and
(e) an elongation at break in the range of 80% to 2000%.

2. The polymer composition of claim 1, wherein said polymer composition comprises from 0.05 to 0.35% by weight of said synthetic amorphous silica, wherein said composition has:
(a) a clarity of greater than 8%, and
(b) a gloss (60°) in the range from 129 to 145.

3. The polymer composition according to claim 2, wherein said random copolymer comprises from 5% to 18% by weight of butene-1 and from 82% to 95% by weight of propylene.

4. The polymer composition according to claim 1, wherein butene-1 is present in the range from 0.5% to 6.5% by weight of the random copolymer.

5. The polymer composition according to claim 4, wherein the composition has a tensile strength of at least 1195 kg/cm² (17,000 psi), a hexane extractable at 50°C of up to 2.6%, a haze of up to 3%, and a xylene soluble level at 23°C of up to 6.0%.

6. The polymer composition according to claim 4, wherein the composition comprises 0% of said synthetic amorphous silica.

7. The polymer composition according to any one of the preceding claims, wherein the random copolymer is a binary copolymer consisting of butane-1 and propylene.

8. The polymer composition according to claims 1, 2, 3, 4, 5 or 6, wherein said random copolymer is prepared by a process comprising contacting propylene and butene-1 under polymerization conditions with a magnesium, titanium-containing catalyst system obtained by contacting (a) a titanium, magnesium-containing procatalyst, (b) an organo-aluminum cocatalyst and (c) an organosilane selectivity control agent.

9. A polymer composition according to Claims 1, 2, 3, 4, 5, or 6, wherein at least part of the random copolymer is a visbroken random copolymer prepared by contacting propylene and butene-1 under polymerization conditions with a magnesium, titanium-containing catalyst system to produce a polymeric material having a melt flow of at least 1.5 dg/min and then visbreaking said resulting polymeric material such that the melt flow ratio of the visbroken random copolymer to the polymeric material is at least 1.5.

10. A polymer composition according to Claims 1, 2, 3, 4, 5, or 6, wherein at least a part of the random copolymer is a visbroken random copolymer prepared by contacting propylene and butene-1 under polymerization conditions with a magnesium, titanium-containing catalyst system to produce a polymeric material having a melt flow of at least 0.8 dg/min and then visbreaking said resulting polymeric material such that the melt flow ratio of the visbroken random copolymer to the polymeric material is at least 2.

11. The polymer composition according to Claims 1, 2, 3, 4, 5, and 6, wherein said composition further comprises an additive package comprising at least one member selected from the group consisting of antioxidants, ultraviolet stabilizers, pigments, dispersants, slip agents, neutralizing agents, nucleating agents, processing stabilizers and mold release agents.

12. The polymer composition according to Claims 1, 2, 3, 4, 5, or 6, wherein said polymer composition further comprises at least one additive selected from the group consisting of tetrakis[methylene(3,5-di-tert-butyl-4-hydroxyhydrocinnamate)]methane, bis(2,4-di-tert-butylphenyl)pentaerythritol diphosphite, erucamide and magnesium aluminum hydroxy carbonate hydrate.

13. A process for preparing the random copolymer as described in Claims 1, 2, 3, 4, 5, or 6, comprising contacting propylene and butene-1 under polymerization conditions with a magnesium, titanium-containing catalyst system obtained by contacting (a) a titanium, magnesium-containing procatalyst, (b) an organo-aluminum cocatalyst and (c) an organosilane selectivity control agent.

14. A film comprising the polymer composition according to Claims 4, 5, or 6, which is oriented.

15. A film comprising (1) an oriented substrate layer of a film according to claim 14, and (2) a polymeric layer on at least one surface of the substrate layer.

16. The film according to claim 15, wherein the polymeric layer is derived from a propylene-butene-1 copolymer comprising from 7% to 15% by weight butene-1.

17. A metallized film or sheet obtained from the polymer composition according to Claims 4, 5, or 6.

18. The metallized film or sheet of claim 17, wherein the wetting index after metallization is at least 50 N/m (50 dynes/cm).

## Patentansprüche

1. Polymerzusammensetzung umfassend (i) ein 0,5 bis 20 Gew.-% Buten-1 und 80 bis 99,5 Gew.-% Propylen umfassendes statistisches Copolymer und (ii) 0-0,35 Gew.-% der Polymerzusammensetzung eines synthetischen amorphen Kieselsäure-Antihaftmittels; worin das synthetische amorphe Kieselsäure-Antihaftmittel eine Schüttdichte im Bereich von 300 bis 360 g/Liter und eine Ölabsorption im Bereich von 80 bis 100 g/100 g aufweist; wobei die Polymerzusammensetzung:
(a) eine Konzentration an bei 50°C mit Hexan extrahierbarem Material von bis zu 5,5%;
(b) eine Trübung von bis zu 5%;
(c) eine Konzentration an bei 23°C in Xylol löslichem Material von bis zu 13%,
(d) einen Zugmodul von mindestens 2812 kg/cm² (40000 psi); und
(e) eine Bruchdehnung im Bereich von 80% bis 2000%
aufweist.

2. Polymerzusammensetzung nach Anspruch 1, worin die Polymerzusammensetzung 0,05 bis 0,35 Gew.-% der synthetischen amorphen Kieselsäure umfaßt, wobei die Zusammensetzung:
(a) eine Klarheit von mehr als 8%; und
(b) einen Glanz (60°) im Bereich von 129 bis 145
aufweist.

3. Polymerzusammensetzung nach Anspruch 2, worin das statistische Copolymer 5 bis 18 Gew.-% Buten-1 und 82 bis 95 Gew.-% Propylen umfaßt.

4. Polymerzusammensetzung nach Anspruch 1, worin Buten-1 im Bereich von 0,5 bis 6,5 Gew.-% des statistischen Copolymers vorhanden ist.

5. Polymerzusammensetzung nach Anspruch 4, worin die Zusammensetzung eine Zugfestigkeit von mindestens 1195 kg/cm² (17000 psi), eine Konzentration an bei 50°C mit Hexan extrahierbarem Material von bis zu 2,6%, eine Trübung von bis zu 3% und eine Konzentration an bei 23°C in Xylol löslichem Material von bis zu 6,0% aufweist.

6. Polymerzusammensetzung nach Anspruch 4, worin die Zusammensetzung 0% der synthetischen amorphen Kieselsäure umfaßt.

7. Polymerzusammensetzung nach irgendeinem der vorhergehenden Ansprüche, worin das statistische Copolymer ein aus Buten-1 und Propylen bestehendes binäres Copolymer ist.

8. Polymerzusammensetzung nach den Ansprüchen 1, 2, 3, 4, 5 oder 6, worin das statistische Copolymer mit Hilfe eines Verfahrens hergestellt wird, welches das Kontaktieren von Propylen und Buten-1 unter Polymerisationsbedingungen mit einem Magnesium-, Titan-haltigen Katalysatorsystem, das durch Kontaktieren (a) eines Titan-, Magnesium-haltigen Prokatalysators, (b) eines Organoaluminium-Cokatalysators und (c) eines Organosilan-Selektivitätssteuerungsmittels erhalten wurde, umfaßt.

9. Polymerzusammensetzung nach den Ansprüchen 1, 2, 3, 4, 5 oder 6, worin zumindest ein Teil des statistischen Copolymers ein bei erhöhter Temperatur mit Peroxid behandeltes statistisches Copolymer ist, welches durch Kontaktieren von Propylen und Buten-1 unter Polymerisationsbedingungen mit einem Magnesium-, Titan-haltigen Katalysatorsystem unter Bildung eines polymeren Materials mit einem Schmelzfluß von mindestens 1,5 dg/Min. und anschließende Behandlung des resultierenden Materials mit Peroxid bei erhöhter Temperatur, so daß das Schmelzflußverhältnis des bei erhöhter Temperatur mit Peroxid behandelten statistischen Copolymers zu dem polymeren Material mindestens 1,5 beträgt, hergestellt wird.

10. Polymerzusammensetzung nach den Ansprüchen 1, 2, 3, 4, 5 oder 6, worin zumindest ein Teil des statistischen Copolymers ein bei erhöhter Temperatur mit Peroxid behandeltes statistisches Copolymer ist, welches durch Kontaktieren von Propylen und Buten-1 unter Polymerisationsbedingungen mit einem Magnesium-, Titan-haltigen Katalysatorsystem unter Bildung eines polymeren Materials mit einem Schmelzfluß von mindestens 0,8 dg/Min. und anschließendes Behandeln des resultierenden polymeren Materials mit Peroxid bei erhöhter Temperatur, so daß das Schmelzflußverhältnis des bei erhöhter Temperatur mit Peroxid behandelten statistischen Copolymers zu dem polymeren Material mindestens 2 beträgt, hergestellt wird.

11. Polymerzusammensetzung nach den Ansprüchen 1, 2, 3, 4, 5 und 6, worin die Zusammensetzung weiter eine Additiv-Packung umfaßt, welche mindestens ein aus der Gruppe bestehend aus Antioxidationsmitteln, UV-Stabilisatoren, Pigmenten, Dispergiermitteln, Gleitmitteln, Neutralisationsmitteln, Keimbildnern, Verarbeitungsstabilisatoren und Formtrennmitteln ausgewähltes Element umfaßt.

12. Polymerzusammensetzung nach den Ansprüchen 1, 2, 3, 4, 5 oder 6, worin die Polymerzusammensetzung weiter mindestens ein aus der Gruppe bestehend aus Tetrakis[methylen(3, 5-di-tert-butyl-4-hydroxyhydrocinnamat)]methan, Bis-(2,4-di-tert-butylphenyl)pentaerythritdiphosphit, Erucamid und Magnesiumaluminiumhydroxycarbonathydrat ausgewähltes Additiv umfaßt.

13. Verfahren zur Herstellung des wie in den Ansprüchen 1, 2, 3, 4, 5 oder 6 beschriebenen statistischen Copolymers, umfassend das Kontaktieren von Propylen und Buten-1 unter Polymerisationsbedingungen mit einem Magnesium-, Titan-haltigen Katalysatorsystem, welches durch Kontaktieren (a) eines Titan-, Magnesium-haltigen Prokatalysators, (b) eines Organoaluminium-Cokatalysators und (c) eines Organosilan-Selektivitätssteuerungsmittels erhalten wird.

14. Dünnfolie umfassend die Polymerzusammensetzung nach den Ansprüchen 4, 5 oder 6, welche orientiert ist.

15. Dünnfolie umfassend (1) eine orientierte Substratschicht aus einer Dünnfolie nach Anspruch 14 und (2) eine polymere Schicht auf mindestens einer Oberfläche der Substratschicht.

16. Dünnfolie nach Anspruch 15, worin die polymere Schicht von einem Propylen-Buten-1-Copolymer abgeleitet ist, welches 7 bis 15 Gew.-% Buten-1 umfaßt.

17. Metallisierte Dünnfolie oder Folie, erhalten aus der Polymerzusammensetzung nach den Ansprüchen 4, 5 oder 6.

18. Metallisierte Dünnfolie oder Folie nach Anspruch 17, worin der Benetzungsindex nach der Metallisierung mindestens 50 N/m (50 Dyn/cm) beträgt.

## Revendications

1. Composition polymérique comprenant (i) un copolymère statistique comprenant 0,5 % à 20 % en poids de butène-1 et 80 à 99,5 % en poids de propylène, et (2) 0 % à 0,35 % en poids de la composition polymérique d'un agent anti-bloquant consistant en silice amorphe synthétique ; dans laquelle ledit agent anti-bloquant consistant en silice amorphe synthétique a une masse volumique apparente comprise dans l'intervalle de 300 à 360 g/litre et une valeur d'absorption d'huile comprise dans l'intervalle de 80 à 100 g/100 g ; ladite composition polymérique ayant ;
(a) une teneur en matières extractibles par l'hexane à 50°C allant jusqu'à 5,5 %,
(b) un trouble allant jusqu'à 5 %,
(c) une teneur en matières solubles dans le xylène à 23°C allant jusqu'à 13 %,
(d) un module de traction d'au moins 2812 kg/cm² (40 000 spi) ; et
(e) un allongement à la rupture compris dans l'intervalle de 80 % à 2000 %.

2. Composition polymérique suivant la revendication 1, qui comprend 0,05 à 0,35 % en poids de la silice amorphe synthétique, ladite composition ayant :
(a) une limpidité supérieure à 8 %, et
(b) une brillance (60°) comprise dans l'intervalle de 129 à 145.

3. Composition polymérique suivant la revendication 2, dans laquelle le copolymère statistique comprend 5 % à 18 % en poids de butène-1 et 82 % à 95 % en poids de propylène.

4. Composition polymérique suivant la revendication 1, dans laquelle le butène-1 est présent en une quantité comprise dans l'intervalle de 0,5 % à 6,5 % en poids du copolymère statistique.

5. Composition polymérique suivant la revendication 4, qui a une résistance à la traction d'au moins 1195 kg/cm² (17 000 psi), une teneur en matières extractibles par l'hexane à 50°C allant jusqu'à 2,6 %, un trouble allant jusqu'à 3 % et une teneur en matières solubles dans le xylène à 23°C allant jusqu'à 6,0 %.

6. Composition polymérique suivant la revendication 4, qui comprend 0 % de la silice amorphe synthétique.

7. Composition polymérique suivant l'une quelconque des revendications précédentes, dans laquelle le copolymère statistique est un copolymère binaire consistant en butène-1 et propylène.

8. Composition polymérique suivant la revendication 1, 2, 3, 4, 5 ou 6, dans laquelle le copolymère statistique est préparé par un procédé comprenant la mise en contact de propylène et de butène-1 dans des conditions de polymérisation avec une formulation de catalyseur contenant du magnésium et du titane obtenue en mettant en contact (a) un procatalyseur contenant du titane et du magnésium, (b) un cocatalyseur consistant en un composé organique d'aluminium et (c) un agent de régulation de sélectivité consistant en un organosilane.

9. Composition polymérique suivant la revendication 1, 2, 3, 4, 5 ou 6, dans laquelle au moins une partie du copolymère statistique consiste en un copolymère statistique ayant subi une viscoréduction préparé en mettant en contact du propylène et du butène-1 dans des conditions de polymérisation avec une formulation de catalyseur contenant du magnésium et du titane de manière à produire une matière polymérique ayant un écoulement en masse fondue d'au moins 1,5 dg/min et en soumettant ensuite à une viscoréduction ladite matière polymérique résultante de telle sorte que le rapport d'écoulement en masse fondue du copolymère statistique ayant subi une viscoréduction à la matière polymérique soit au moins égale à 1,5.

10. Composition polymérique suivant la revendication 1, 2, 3, 4, 5 ou 6, dans laquelle au moins une partie du copolymère statistique est constituée d'un copolymère statistique ayant subi une viscoréduction préparé en mettant en contact du propylène et du butène-1 dans des conditions de polymérisation avec une formulation de catalyseur contenant du magnésium et du titane pour produire une matière polymérique ayant un écoulement en masse fondue d'au moins 0,8 dg/min et en soumettant ensuite à une viscoréduction ladite matière polymérique résultante de telle sorte que le rapport d'écoulement en masse fondue du copolymère statistique ayant subi une viscoréduction à la matière polymérique soit au moins égal à 2.

11. Composition polymérique suivant les revendications 1, 2, 3, 4, 5 et 6, qui comprend en outre un multi-additif comprenant au moins un membre du groupe consistant en des anti-oxydants, des agents de stabilisation vis-à-vis du rayonnement ultraviolet, des pigments, des dispersants, des agents de glissement, des agents neutralisants, des agents de nucléation, des stabilisants de traitement et des agents de démoulage.

12. Composition polymérique suivant la revendication 1, 2, 3, 4, 5 ou 6, qui comprend en outre au moins un additif choisi dans le groupe consistant en tétrakis-[méthylène(3,5-di-tertio-butyl-4-hydroxyhydrocinnamate]-méthane, diphosphite de bis(2,4-di-tertio-butylphényl)pentaérythritol, érucamide et hydrate d'hydroxycarbonate de magnésium et d'aluminium.

13. Procédé pour la préparation du copolymère statistique décrit dans la revendication 1, 2, 3, 4, 5 ou 6, comprenant la mise en contact de propylène et de butène-1 dans des conditions de polymérisation avec une formulation de catalyseur contenant du magnésium et du titane obtenue en mettant en contact (a) un procatalyseur contenant du titane et du magnésium, (b) un cocatalyseur consistant en un composé organique d'aluminium et (c) un agent d'ajustement de sélectivité consistant en un organosilane.

14. Film comprenant la composition polymérique suivant la revendication 4, 5 ou 6, qui est orienté.

15. Film comprenant (1) une couche orientée servant de substrat constituée d'un film suivant la revendication 14 et (2) une couche polymérique sur au moins une surface de la couche servant de substrat.

16. Film suivant la revendication 15, dans lequel la couche polymérique est dérivée d'un copolymère propylène-butène-1 comprenant 7 % à 15 % en poids de butène-1.

17. Film ou feuille métallisé obtenu à partir de la composition polymérique suivant la revendication 4, 5 ou 6.

18. Film ou feuille métallisé suivant la revendication 17, dans lequel l'indice de mouillage après métallisation est égal à au moins 50 N/m (50 dynes/cm).
